(19) Europäisches Patentamt
European Patent Office
Office européen des brevets

(11) Veröffentlichungsnummer: **0 054 266**
**B1**

(12) # EUROPÄISCHE PATENTSCHRIFT

(45) Veröffentlichungstag der Patentschrift: **29.05.85**

(21) Anmeldenummer: **81110325.8**

(22) Anmeldetag: **10.12.81**

(51) Int. Cl.⁴: **C 09 C 3/08**, C 09 C 1/00, C 09 C 1/20, C 09 C 1/36, C 09 C 1/04, C 09 C 1/22, C 09 C 1/40

(54) **Korrosionsschutzpigmente sowie ihre Verwendung in Anstrichmitteln.**

(30) Priorität: **11.12.80 DE 3046697**

(43) Veröffentlichungstag der Anmeldung: **23.06.82 Patentblatt 82/25**

(45) Bekanntmachung des Hinweises auf die Patenterteilung: **29.05.85 Patentblatt 85/22**

(84) Benannte Vertragsstaaten: **AT BE DE FR GB IT NL SE**

(56) Entgegenhaltungen:
**BE - A - 672 956**
**FR - A - 1 131 676**
**FR - A - 2 281 410**
**US - A - 2 037 322**
**US - A - 2 172 505**

(73) Patentinhaber: **Dr. Hans Heubach GmbH & Co. KG, Heubachstrasse Postfach 1160, D-3394 Langelsheim 1 (DE)**

(72) Erfinder: **Haacke, Wigo, Dr. Ing., Lampestrasse 1, D-3380 Goslar (DE)**
Erfinder: **Adrian, Gerhard, Dipl.-Chem., Talstrasse 20 a, D-3380 Goslar 1 (DE)**
Erfinder: **Gawol, Manfred, Altenauer Strasse 15, D-3392 Clausthal-Zellerfeld (DE)**
Erfinder: **Heubach, Rainer, Dipl.-Kfm, Nonnenweg 14, D-3380 Goslar (DE)**
Erfinder: **Bittner, Annegret, Am Wisenhang 19, D-3394-Langelsheim 2 (DE)**

(74) Vertreter: **Patentanwälte Müller-Boré, Deufel, Schön, Hertel, Lewald, Otto, Postfach 26 02 47 Isartorplatz 6, D-8000 München 26 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Metalloxid-, -phosphat-, -chromat- oder molybdat-Korrosionsschutzpigmente sind bekannt.

Einige dieser Pigmente haben den Nachteil, daß sie in Lacksystemen nur ungenügende Korrosionsschutzwirkung aufweisen und zur Blasenbildung neigen.

In der DE-PS 2 204 985 werden Korrosionsschutzmittel beschrieben, die bei der Herstellung von Überzügen zum Schutz von Metallen, insbesondere von Eisen, Verwendung finden sollen, welche Zink- und/oder Bleisalze der Nitrophthalsäure enthalten. Es handelt sich hierbei um sogenannte Korrosionsinhibitoren, die verhältnismäßig sehr teuer sind und nur in Kombination mit anderen Pigmenten zur Anwendung kommen können. In der DE-AS 2 502 781 wird jedoch darauf hingewiesen, daß derartige Salze der Nitrophthalsäuren noch Nachteile aufweisen, die auf eine Verschlechterung des Korrosionsschutzwertes durch Blasenbildung zurückzuführen sind. Anstelle der Salze der Phthalsäure werden dafür die entsprechenden Zink- oder Bleisalze der Nitroisophthalsäure bzw. der Nitroterephthalsäure empfohlen. Es handelt sich hierbei ebenfalls um sogenannte Korrosionsinhibitoren, die den Lacksystemen in Kombination mit anderen Pigmenten zuzusetzen sind. Der sehr hohe Preis auch dieser Korrosionsinhibitoren schränkt jedoch ihre Einsatzbreite ein.

Hinzu kommt, daß sie nur in geringen Mengen zum Einsatz kommen können, um andere Filmeigenschaften nicht zu beeinträchtigen, und daß sie in ihrer Wirksamkeit mit aktiven Korrosionsschutzpigmenten nicht zu vergleichen sind.

Der Einsatz verschiedener Phthalsäurederivate zur Behandlung von Blei- und Titandioxidpigmenten ist auch aus anderen Gründen als zum Zwecke des Korrosionsschutzes schon bekannt.

So werden gemäß FR-A-2 281 410 zur Verbesserung der Wärmestabilität und Abriebfestigkeit von Pigmenten die Pigmentpartikel mit einem Überzug aus aromatischen Carbonsäuren oder deren Salzen versehen, wobei diese Aufgabe nur dann zufriedenstellend lösbar ist, wenn auf Pigmente auf der Basis von Bleichromat, -sulfat und/oder -molybdat zunächst ein innerer Überzug aus Siliciumdioxid oder Aluminiumoxid aufgebracht und dann in der Kälte die Außenschicht, die in der Regel um die 15 Gew.-% und bis zu 33 Gew.-%, bezogen auf das Pigment, ausmacht, erzeugt wird.

Gemäß DE-A-672 956 wird die Farbbrillianz und -intensität von Pigmenten gesteigert durch Vermahlen von Pigment und Phthalsäureanhydrid und/oder Phthalsäureisomer in der Kälte unter Scherbeanspruchung und Zusatz von pigmenthaltigen Mahlhilfsmitteln da, andernfalls die erstrebte Verbesserung nicht erzielt wird.

Aus FR-A-1 131 676 ist die Anfärbung von Kunststoffmaterial wie Polystyrol mit Bleipigmenten bekannt, die 5 bis 75 und vorzugsweise etwa 20 Gewichtsteile Terephthalsäure oder Chlorterephthalsäure sowie vorteilhafterweise zusätzlich basisches Aluminiumsulfat enthalten. Erzielt wird dadurch eine Verbesserung der Farbstabilität dieser Kunststoff-materialien bei hohen Temperaturen.

Zur Erzielung eines zufriedenstellenden Korrosionsschutzes sind demgegenüber spezielle Bedingungen Voraussetzung. So wird in der Druckschrift Kittel, Lehrbuch der Lacke und Beschichtungen, Band 5, 1977, Seiten 52, 94 und 95 hervorgehoben, daß der beste Korrosionsschutz von Pigmenten erzielt wird, die in kathodischen und anodischen Bereichen eines Metalls wirksam sind durch so starke Erniedrigung der Potentialdifferenz zwischen Lokalelementen, daß nur noch ein äußerst geringer Strom zwischen Anode und Kathode fließen kann. Eine besondere Bedeutung kommt somit der Verbesserung der Haftung zu, die durch eine möglichst starke Hydrophobierung bewirkt wird.

Die Erfindung hat sich daher die Aufgabe gestellt, die eingangs erwähnten Korrosionsschutzpigmente hinsichtlich ihrer Korrosionsschutzwirkung zu verbessern, insbesondere diese Pigmente dahingehend zu modifizieren, daß sie in Lacksystemen die Haftung und damit die Korrosionsschutzwirkung deutlich verbessern. Dies setzt auch eine festere Bindung zwischen Pigmentoberfläche und den oleophilen Bindemitteln voraus.

Diese Aufgabe wird durch die Erfindung gemäß den Patentansprüchen gelöst.

Die erfindungsgemäßen Pigmente besitzen gegenüber den bekannten Pigmenten den Vorteil, daß bei ihnen die Wechselwirkung mit Bindemittel und Untergrund in besonders vorteilhafter Weise beeinflußt ist, was zu einer deutlichen Verbesserung der Haftung und der Korrosionsschutzwirkung von Beschichtungen führt, die unter Einsatz von Anstrichmitteln erhalten worden sind, welche unter Verwendung der erfindungsgemäßen Pigmente formuliert worden sind.

Vorzugsweise werden die erfindungsgemäßen Pigmente durch Behandlung mit Phthalsäure und/oder Phthalsäureanhydrid in einer Menge bis zu 10 Gew.-%, insbesondere 0,3 bis 3 Gew.-%, bezogen auf die Pigmente, erhalten. Die Behandlung mit Phthalsäure und/oder Phthalsäureanhydrid erfolgt vorzugsweise in einem wäßrigen Medium, wobei die Konzentration der Phthalsäure und/oder Phthalsäureanhydridlösungen vorzugsweise 5 bis 8 Gew.-% beträgt. Dabei wird die Behandlung bei erhöhter Temperatur durchgeführt, insbesondere bei einer Temperatur zwischen 70 und 80° C.

Gemäß einer anderen Ausführungsform der Erfindung kann man die Pigmente auch mit pulverisierter Phthalsäure und/oder pulverisiertem Phthalsäureanhydrid vermischen und die Mischung auf Temperaturen bis 150° C erhitzen.

Eine andere Herstellungsvariante besteht darin, Phthalsäure bzw. Phthalsäureanhydrid in der angegebenen Weise einer Reaktionskomponente zuzusetzen und anschließend die Umsetzung mit der anderen Reaktionskomponente, beispielsweise Phosphorsäure, vorzunehmen.

In erster Linie werden die erfindungsgemäßen Pigmente in Anstrichmitteln eingesetzt.
Die folgenden Beispiele erläutern die Erfindung.

## Beispiel 1

100 kg Zinkoxid werden in 800 l Wasser aufgeschlämmt und während einer Zeitspanne von 2 bis 3 Stunden mit 88 kg einer 85%igen Phosphorsäure umgesetzt. Dabei erhält man ein Produkt mit folgender Zusammensetzung:

$$0{,}18\,ZnO \cdot 0{,}82\,[Zn_3(PO_4)_2 \cdot 1{,}5\,H_2O]$$

Anschließend wird dem sich noch in der wäßrigen Aufschlämmung befindlichen Produkt bei einer Temperatur von 70 bis 90°C eine fast kochende Lösung von 0,8 Teilen Phthalsäureanhydrid und 10 Teilen Wasser, bezogen auf Pigment, während einer Zeitspanne von 30 Minuten zugegeben. Nach 10 Minuten Rühren werden die Pigmente von der wäßrigen Suspension durch Filtrieren abgetrennt, bei 105°C getrocknet und vermahlen.

## Beispiel 2

500 kg Pigment aus Zinkoxid und einer Sauerstoffsäure des Phosphors oder Molybdäns werden in 2500 l Wasser auf 70 bis 90°C erhitzt. Unter Rühren wird während einer Zeitspanne von 60 Minuten eine fast kochende Lösung von 5 Gew.-Teilen Phthalsäureanhydrid und 60 Gew.-Teilen Wasser, bezogen auf Pigment, zugegeben. Nach Beendigung der Reaktion wird sofort abfiltriert, getrocknet und vermahlen.

## Beispiel 3

Zinkmolybdat mit der allgemeinen Formel

$$x\,ZnO \cdot y\,ZnMoO_4$$

wird in Wasser aufgeschlämmt, auf 70 bis 90°C erhitzt und unter Rühren eine fast kochende Lösung von Phthalsäure zugegeben. Dann wird wie in den Beispielen 1 und 2 beschrieben verfahren.

## Beispiel 4

500 kg ZnO werden in 2500 l Wasser auf 70 bis 80°C erhitzt, unter Rühren wird während 30 Minuten eine fast kochende Lösung von 2,5 Teilen Phthalsäureanhydrid in 30 Gew.-Teilen Wasser zugegeben. Anschließend wird innerhalb von ca. 2 Stunden mit 375 kg 75%iger Phosphorsäure die Umsetzung zum basischen Zinkphosphat vollzogen. Es entsteht ein Produkt mit folgender Mol-Formel:

$$0{,}6\,ZnO \cdot 0{,}4\,[Zn_3\,(PO_4)_2 \cdot 1{,}8\,H_2O]$$

Die erfindungsgemäßen Korrosionsschutzpigmente wurden im Vergleich zu entsprechenden Pigmenten ohne Phthalsäure- bzw. Phthalsäureanhydrid-Behandlung in folgenden Anstrichsystemen auf ihre Korrosionsschutzwirkung getestet:

1. Grundanstrich auf Basis von Epoxidester mit PVK-Werten von 40 bis 45%, freier Bindemittelanteil 20%, Q = 0,8,
2. Grundanstrich auf Basis von mit Holzöl/Tallöl modifiziertem Alkydharz, PVK-Werte von 33 bis 39%, freier Bindemittelanteil 30%, Q = 0,7,
3. Einschichtlackierung auf Basis Alkyd-/Melaminharz, PVK-Werte 30 bis 34%, freier Bindemittelanteil 40%, Q = 0,6.

Die Pigment-Füllstoffe-Kombinationen waren wie folgt aufgebaut:

40 Vol.-% Korrosionsschutzpigment
25 Vol.-% EWO-Schwerspat
25 Vol.-% Magnesiumsilikat
10 Vol.-% Titandioxid.

Bei festgelegten freien Bindemittelanteilen (Q-Werte) wurden die jeweiligen KPVK über die Ölzahl bestimmt und die freien PVK rechnerisch ermittelt.

$$Q = \frac{PVK}{KPVK}$$

Die Lackansätze wurden mit Hilfe der Perlmühle dispergiert, Mahlfeinheit ca. 15 µm, und danach sandgestrahlte Tiefziehbleche durch Spritzapplikation beschichtet, Schichtdicke ca. 50 ± 5 µm.

Die Korrosionsschutzprüfung erfolgte im Salzsprühtest nach DIN 50021 und im Kesternich-Prüfgerät nach DIN 50018.

Die Kriterien zur Bewertung der Korrosion nach

Blasenbildung der Beschichtung nach DIN 53209
Haftungsverlust der Beschichtung nach DIN 53151
Unterwanderung an Verletzungsstellen nach DIN 53167

wurden zu sogenannten Bewertungsziffern (BWZ) zusammengefaßt:

BWZ 100 = sehr gut
BWZ 90—80 = gut
BWZ 70—60 = gut bis mäßig
BWZ 50—40 = mäßig
BWZ 30—20 = schlecht
BWZ 10— 0 = sehr schlecht

Die erhaltenen Ergebnisse sind in der folgenden Tabelle zusammengefaßt.

Tabelle

Bindemittel: Epoxidester Q = 0,8

| Korrosionsschutzpigment | PVK in % | Bewertungsziffern (BWZ) SS DIN 50021 300 h | SFW DIN 50018 1,0S 10 Zyklen |
|---|---|---|---|
| 1 Zinkphosphat | 45,1 | 20 | 60 |
| 2 Zinkoxidphosphat + 0,3% PSA | 41,0 | 90 | 80 |
| 3 Zinkmolybdat | 42,8 | 30 | 40 |
| 4 Zinkmolybdat + 0,5% PS | 41 | 50 | 70 |

PSA = Phthalsäureanhydrid
PS = Phthalsäure

Entsprechende Verbesserungen des Korrosionsschutzwertes konnten auch in oben erwähntem Alkydharz auf der Basis Holzöl/Tallöl bei einem Q-Wert von 0,7 und in einer ofentrocknenden Einschichtlackierung auf der Basis Alkyd-/Melaminharz, Q = 0,6, bestätigt werden.

**Patentansprüche für die Vertragsstaaten BE, DE, FR, GB, IT, NL, SE**

1. Metallphosphat- und/oder -molybdat-Korrosionsschutzpigmente auf der Basis von Zink und Magnesium, dadurch gekennzeichnet, daß sie durch Behandlung mit Phthalsäure und/oder Phthalsäureanhydrid bei erhöhter Temperatur erhältlich sind.

2. Pigmente nach Anspruch 1, dadurch gekennzeichnet, daß sie durch Behandlung mit Phthalsäure und/oder Phthalsäureanhydrid in einer Menge bis zu 10 Gew.-%, insbesondere 0,3 bis 3 Gew.-%, bezogen auf die Pigmente, erhältlich sind.

3. Pigmente nach den Ansprüchen 1 und 2, dadurch gekennzeichnet, daß sie durch Behandlung mit Phthalsäure oder Phthalsäureanhydrid in einem wäßrigen Medium erhältlich sind.

4. Pigmente nach Anspruch 3, dadurch gekennzeichnet, daß sie durch Behandlung bei einer Temperatur von 70 bis 80° C erhältlich sind.

5. Pigmente nach den Ansprüchen 1 bis 4, dadurch gekennzeichnet, daß sie durch Zugabe von Phthalsäure und/oder Phthalsäureanhydrid zu einem der Reaktionspartner vor der Umsetzung zu dem jeweiligen Pigment erhältlich sind.

6. Pigmente nach den Ansprüchen 1 und 2, dadurch gekennzeichnet, daß sie durch Vermischen der Ausgangspigmente mit pulverisierter Phthalsäure und/oder pulverisiertem Phthalsäureanhydrid und Erhitzen der Mischung auf Temperaturen bis zu 150° C erhältlich sind.

7. Verwendung der Pigmente gemäß den Ansprüchen 1 bis 6 als Korrosionsschutzpigmente in Anstrichmitteln.

**Patentansprüche für den Vertragsstaat AT**

1. Verfahren zur Herstellung von Metallphosphat- und/oder -molybdat-Korrosionsschutzpigmenten auf der Basis von Zink und Magnesium, dadurch gekennzeichnet, daß man die Pigmente mit Phthalsäure und/oder Phthalsäureanhydrid bei erhöhter Temperatur behandelt.

2. Verfahren nach Anspruch 1, dadurch gekennzeichnet, daß man die Pigmente mit Phthalsäure und/oder Phthalsäureanhydrid in einer Menge bis zu 10 Gew.-%, insbesondere 0,3 bis 3 Gew.-%, bezogen auf die Pigmente, behandelt.

3. Verfahren nach den Ansprüchen 1 und 2, dadurch gekennzeichnet, daß man die Pigmente mit Phthalsäure oder Phthalsäureanhydrid in einem wäßrigen Medium behandelt.

4. Verfahren nach Anspruch 3, dadurch gekennzeichnet, daß man die Behandlung bei einer Temperatur von 70 bis 80° C durchführt.

5. Verfahren nach den Ansprüchen 1 bis 4, dadurch gekennzeichnet, daß man Phthalsäure und/oder Phthalsäureanhydrid zu einem der Reaktionspartner vor der Umsetzung zu dem jeweiligen Pigment zugibt.

6. Verfahren nach den Ansprüchen 1 und 2, dadurch gekennzeichnet, daß man die Ausgangspigmente mit pulverisierter Phthalsäure und/oder pulverisiertem Phthalsäureanhydrid vermischt und die Mischung auf Temperaturen bis zu 150° C erhitzt.

7. Verwendung der gemäß den Ansprüchen 1 bis 6 hergestellten Pigmente als Korrosionsschutzpigmente in Anstrichmitteln.

**Claims for the Contracting States BE, DE, FR, GB, IT, NL, SE**

1. Metal phosphate and/or mulybdate corrosion protection pigments based on zinc and magnesium, characterised in that they can be obtained by treatment with phthalic acid and/or phthalic anhydride at increased temperatures.

2. Pigments according to Claim 1, characterised in that they can be obtained by treatment with phthalic acid and/or phthalic anhydride in an amount of up to 10% by weight, in particular, 0.3 to 3% by weight, relative to the pigments.

3. Pigments according to Claims 1 and 2, characterised in that they can be obtained by treatment with phthalic acid or phthalic anhydride in an aqueous medium.

4. Pigments according to Claim 3, characterised in that they can be obtained by treatment at a temperature of 70 to 80° C.

5. Pigments according to Claims 1 to 4, characterised in that they can be obtained by adding phthalic acid and/or phthalic anhydride to one of the reactants before the reaction to the respective pigment.

6. Pigments according to Claims 1 and 2, characterised in that they can be obtained by mixing the starting pigments with pulverulent phthalic acid and/or pulverulent phthalic anhydride and heating the mixture to temperatures up to 150° C.

7. Use of pigments according to Claims 1 to 6 as corrosion protection pigments in paints.

**Claims for the Contracting State AT**

1. Process for the preparation of metal phosphate and/or molybdate corrosion protection pigments based on zinc and magnesium, characterised in that the pigments are treated with phthalic acid and/or phthalic anhydride at increased temperatures.

2. Process according to claim 1, characterised in that the pigments are treated with phthalic acid and/or phthalic anhydride in an amount of up to 10% by weight, in particular, 0,3 to 3% by weight, relative to the pigments.

3. Process according to claims 1 and 2, characterised in that the pigments are treated with phthalic acid or phthalic anhydride in an aqueous medium.

4. Process according to claim 3, characterised in that the treatment is effected at a temperature of 70 to 80° C.

5. Process according to claims 1 to 4, characterised in that phthalic acid and/or phthalic anhydride is added to one of the reactants before the reaction to the respective pigment.

6. Process according to claims 1 and 2, characterised in that the starting pigments are mixed with pulverulent phthalic acid and/or pulverulent phthalic anhydride and the mixture is heated to temperatures up to 150° C.

7. Use of pigments according to claims 1 to 6 as corrosion protection pigments in paints.

**Revendications pour les Etats contractants BE, DE, FR, GB, IT, NL, SE**

1. Pigments de phosphate et/ou molybdate métallique inhibiteurs de corrosion, à base de zinc et de magnésium, caractérisé par le fait que l'on peut les obtenir par traitement à l'acide phtalique et/ou à l'anhydride phtalique à température élevée.

2. Pigments selon la revendication 1, caractérisés par le fait que l'on peut les obtenir par traitement à l'acide phtalique et/ou à l'anhydride phtalique en quantité atteignant 10% en poids, en particulier de 0,3 à 3% en poids, relativement aux pigments.

3. Pigments selon les revendications 1 et 2, caractérisés par le fait que l'on peut les obtenir par traitement à l'acide phtalique ou à l'anhydride phtalique dans un milieu aqueux.

4. Pigments selon la revendication 3, caractérisés par le fait que l'on peut les obtenir par traitement à une température de 70 à 80° C.

5. Pigments selon les revendications 1 à 4, caractérisés par le fait que l'on peut les obtenir par addition d'acide phtalique et/ou d'anhydride phtalique à l'un des réactifs, avant la réaction donnant le pigment dont il s'agit.

6. Pigments selon les revendications 1 et 2, caractérisés par le fait que l'on peut les obtenir en mélangeant les pigments initiaux à de l'acide phtalique pulvérisé et/ou à de l'anhydride phtalique pulvérisé et en chauffant le mélange à des températures allant jusqu'à 150° C.

7. Application des pigments selon les revendications 1 à 6 comme pigments inhibiteurs de corrosion dans des peintures.

**Revendications pour l'Etat contractant AT**

1. Procédé pour l'obtention de phosphate et/ou molybdate métallique inhibiteurs de corrosion, à base de zinc et de magnésium, caractérisé en ce que les pigments sont traités à l'acide phtalique et/ou à l'anhydride phtalique à température élevée.

2. Procédé selon la revendication 1, caractérisé en ce que les pigments sont traités à l'acide phtalique et/ou à l'anhydride phtalique en quantité atteignant 10% en poids, en particulier de 0,3 à 3% en poids, relativement aux pigments.

3. Procédé selon les revendications 1 et 2, caractérisé en ce que les pigments sont traités à l'acide phtalique ou à l'anhydride phtalique dans un milieu aqueux.

4. Procédé selon la revendication 3, caractérisé en ce que le traitement est effectué à une température de 70 à 80° C.

5. Procédé selon les revendications 1 à 4, caractérisé en ce que l'acide phtalique et/ou l'anhydride phtalique est ajouté à l'un des réactifs avant la réaction conduisant au pigment dont il s'agit.

6. Procédé selon les revendications 1 et 2, caractérisé en ce que les pigments initiaux sont mélangés à de l'acide phtalique pulvérisé et/ou à de l'anhydride phtalique pulvérisé et en ce que l'on chauffe le mélange à des températures allant jusqu'à 150° C.

7. Application des pigments selon les revendications 1 à 6 comme pigments inhibiteurs de corrosion dans des moyens de revêtement de peinture.